# EUROPEAN PATENT APPLICATION

(11) **EP 4 604 509 A1**
(43) Date of publication of application: **20.08.2025**
(21) Application number: 23865867.8
(22) Date of filing: 14.09.2023
(51) Int. Cl.: H04M 3/00, G06F 16/9535, H04L 65/1093, H04N 21/4788, H04N 7/14

(54) **DEVICE FOR PROVIDING MATCHING SERVICE AND METHOD THEREOF**

(30) Priority: 16.09.2022 KR 20220117358; 29.06.2023 KR 20230084531; 08.09.2023 KR 20230119474
(71) Applicant: Hyperconnect LLC, Seoul 06164 (KR)
(72) Inventor: KIM, Sun Ki, Seoul 06164 (KR); NAM, Ho Yeon, Seoul 06164 (KR); KIM, Yun Ji, Seoul 06164 (KR); PARK, Joon Il, Seoul 06164 (KR)
(74) Representative: Haseltine Lake Kempner LLP
(86) International application number: PCT/KR2023/013824
(87) International publication number: WO 2024/058571

(57) **Abstract**

According to the present invention, a method of providing a matching service from a terminal of a first user is disclosed, comprising: a step in which recommendation information is provided that comprises information about one or more users; a step in which a selection input for a second user among the one or more users is acquired; a step in which information about waiting for matching with the second user is acquired; and a step in which, if the first user and the second user are matched, information is provided that relates to a connection with the second user.

## Description

### Technical Field

The present invention relates to a device that provides a matching service and to a method for the same. More specifically, the present invention relates to a device (a terminal of a first user) that: provides recommendation information; if a selection input with respect to a second user is acquired, acquires information about waiting for matching with the second user; and if the first user and the second user are being matched, provides information related to a connection with the second user.

### Background Art

As electronic technology advances, terminals such as smartphones and tablet PCs are becoming more widespread. Such high-performance terminals can support functionality such as photography, playback, and communication with other terminals; based on such functionality, users can chat and make video calls using their own terminals.

There may be various types of such services related to chatting or video calls or the like between users. For example, a random video chat service is a service that connects a terminal of a user who has requested to use the random video chat service with a terminal of a user randomly selected from among the users using the random video chat service.

Although connecting users randomly in this way has the advantage of providing opportunities fairly, it has the drawback that the likelihood of matching with a desired partner is low.

In this regard, reference can be made to such prior art references as KR102044241B1, KR101786944B1, and the like.

### Detailed Description of the Invention

### Technical Problem to be Solved

The problem that the present embodiments seek to solve is, in order to resolve the above-described drawbacks, to provide a terminal of a first user and a method for the same, wherein: recommendation information is provided that comprises information about one or more users; an selection input is acquired with respect to a second user among the one or more users; information about waiting for matching with the second user is acquired; and if the first user and the second user are matched, information is provided that relates to a connection with the second user.

The technical problems to be solved by the present embodiments are not limited to the technical problem set forth above; further technical problems can be inferred from the embodiments below.

### Means of Solving the Problem

A method of providing a matching service from a terminal of a first user according to the present embodiment comprises: a step in which recommendation information is provided that comprises information about one or more users; a step in which a selection input is acquired with respect to a second user among the one or more users; a step in which information about waiting for matching with the second user is acquired; and a step in which, if the first user and the second user are matched, information is provided related to a connection with the second user.

According to one embodiment, the method of providing a matching service further comprises a step in which waiting information for random matching of the first user is acquired.

According to one embodiment, a logic for deciding on information about one or more candidate users associated with the random matching partner, and a logic for deciding on information about the one or more users that the recommendation information comprises, may differ from one another.

According to one embodiment, the step of providing the recommendation information comprises a step in which a request for a matching service is received from the first user by selecting another user; and a step in which the recommendation information is provided in response to the request from the first user.

According to one embodiment, if the second user is currently being matched with another user, when the matching between the second user and the other user is terminated, the server may match the second user with a user associated with the highest priority waiting information, from among one or more items of information about waiting for matching with the second user.

According to one embodiment, the server may decide the priority of the one or more items of information about waiting for matching with the second user based on the order in which they were acquired.

According to one embodiment, among the one or more pieces of information about waiting for matching with the second user, waiting information associated with a user using a particular feature may have a higher priority than waiting information associated with another user who is not using the particular feature.

According to one embodiment, if the second user is not currently being matched with another user, the server may match the first user and the second user.

According to one embodiment, the step in which the recommendation information is provided may comprise: a step in which the one or more users are decided based on established condition information, and the established condition information may comprise at least one of: a condition related to whether the user is unsuitable for matching with the first user, a condition related to the user's profile information, and a condition related to whether the user has a history that is comprised within the recommendation information that was provided to the first user and is within established criteria.

According to one embodiment, the recommendation information may comprises at least one of the following items of information: the nationality of the one or more users, the age of the one or more users, the profile image of the one or more users, whether the one or more users are connected to the matching service in real time, and whether the one or more users are currently being matched with another user.

According to one embodiment, the method of providing a matching service may further comprise a step in which, in response to the selection input, it is confirmed whether to proceed with the matching process; and if it is confirmed to proceed with the matching process, the terminal of the first user may acquire the information about waiting for matching with the second user.

According to one embodiment, the matching process may be carried out with greater priority than a process of matching the first user and a partner through random matching.

According to one embodiment, it may be determined whether to proceed with the matching process based on one or more of: the number of items of waiting information associated with the first user, and the number of items of information about waiting for matching with the second user.

According to one embodiment, the step in which it is confirmed whether to proceed with the matching process may comprise: a step in which it is determined whether the quantity of assets held by the first user is at least the quantity of assets required to acquire information about waiting for matching with the second user and to match the second user with the first user; and a step in which if the quantity of assets held by the first user is less than the required quantity of assets, information is provided indicating that the assets are insufficient.

According to one embodiment, if it is confirmed to proceed with the matching process, the method of providing a matching service may further comprise a step in which one or more of the following is provided: information about whether there is additional waiting information associated with the first user in addition to the information about waiting for matching with the second user; and if there is additional waiting information associated with the first user, that waiting information.

According to one embodiment, the method may further comprise: a step in which the status of the first user's wait for matching with the second user is determined; a step in which if the wait of the first user for matching with the second user corresponds to a normal progress state, a first condition is applied that relates to the expiration of the wait of the first user; and a step in which, if the wait of the first user for matching with the second user is in a paused state, a second condition is applied that relates to the expiration of the wait of the first user.

According to one embodiment, the method may further comprise a step in which information is provided about the time remaining until the expiration of the wait of the first user, in relation to the wait of the first user for matching with the second user.

According to one embodiment, if the first user and the second user are being matched, the terminal of the first user may provide a match termination function after a set time has elapsed from the time the first user and the second user were matched.

A terminal of a first user that provides a matching service according to one embodiment comprises a transceiver, a memory that stores commands, and a processor; the processor is connected to the transceiver and the memory and provides recommendation information comprising information about one or more users, acquires a selection input with respect to a second user comprised among the one or more users, acquires information about waiting for matching with the second user, and, if the first user and the second user are being matched, provides information related to a connection with the second user.

A method of providing a matching service from a terminal of a second user according to one embodiment comprises a step in which waiting information associated with a first user for matching with the second user is confirmed; and a step in which if the first user and the second user are being matched, information is provided that relates to a connection with the first user; a selection input with respect to the second user is acquired from the terminal of the first user, and the waiting information is acquired from the terminal of the first user.

Particulars of other embodiments are set forth in the detailed description and drawings.

### Effect of the Invention

According to the present invention, a device providing a matching service and a method for the same can provide a function that can increase the likelihood of matching with a desired partner while preventing each user from being provided with matching opportunities in an excessively unfair way, thereby increasing overall user satisfaction with use of the service.

The effects of the invention are not limited to the effects mentioned above; further effects not mentioned will be plainly apparent to a person of ordinary skill in the art based on what is recited in the claims.

### Brief Description of the Drawings

FIG. 1 is a schematic drawing showing a system that provides a matching service according to one embodiment.
FIG. 2 is an operation flowchart illustrating the operation of each device in a system providing a matching service according to one embodiment.
FIG. 3 is a drawing illustrating an exemplary function for using the service for matching by selecting a partner according to one embodiment.
FIG. 4 is a drawing illustrating an exemplary screen display providing status information related to the first user's wait according to one embodiment.
FIG. 5 is a drawing illustrating, by way of example, recommendation information according to one embodiment.
FIG 6 is a screen display illustrating, by way of example, information about waiting for matching with a selected partner according to one embodiment.
FIG. 7 is a drawing illustrating, by way of example, a screen display when the first user's wait is in a paused state according to one embodiment.
FIG. 8 is a drawing illustrating examples according to one embodiment of providing status information related to the first user's wait on part of the screen even if the first user leaves a page containing recommendation information.
FIG. 9 is a drawing illustrating, by way of example, an operation of providing information related to a connection with the second user when the first user and the second user are being matched, according to one embodiment.
FIG. 10 is an operation flowchart of a method of providing a matching service in the terminal of the first user according to one embodiment.
FIG. 11 is an exemplary drawing of the configuration of the terminal of the first user according to one embodiment.

### Best Mode of Implementing the Invention

The terms used in the embodiments have been selected from conventionally used terms as much as possible considering the functions of the present invention, but this may vary depending on the intent or precedents of technicians working in the field, the emergence of new technologies, and the like. Additionally, in some particular cases, terms have been arbitrarily selected by the applicant; in such cases, the meaning thereof will be described in detail in the relevant portion of the description. Therefore, the terms used in the present invention must be defined based on the meaning of the terms and the overall content of this invention, rather than simply based on the names of the terms.

When a portion of a specification is said to "comprise" a component, this does not mean that it excludes other components, but rather that it may further comprise other components, unless otherwise stated. Additionally, terms such as "... part," "... module," and the like, as set forth in the specification, refer to a unit that processes at least one function or operation, which may be implemented by hardware or software, or a combination of hardware and software.

The expression "at least one of a, b, and c" as used throughout the specification may encompass "only a," "only b," "only c," "a and b," "a and c," "b and c," or "all of a, b, and c."

The "terminal" mentioned below may be implemented as a computer or portable terminal capable of connecting to a server or another terminal via a network. "Computer" in this case may encompass, for example, a notebook, desktop, or laptop on which a web browser is loaded, and "portable terminal" may encompass for example, a wireless communication device that ensures portability and mobility, such as a communication-based terminal such as IMT (International Mobile Telecommunication), CDMA (Code Division Multiple Access), W-CDMA (W-Code Division Multiple Access), LTE (Long Term Evolution), and any sort of handheld-based wireless communication device such as a smartphone, tablet PC, or the like.

Hereinbelow, one embodiment of the present invention will be described in detail, with reference to the attached drawings, so that a person of ordinary skill in the art of the field to which the present invention belongs can readily implement it. However, the present invention is not limited to the embodiment described here, and may be implemented in several different forms.

Hereinbelow, one embodiment of the present invention is described in detail with reference to the attached drawings.

In describing the embodiments, the description of technical content will be omitted that is widely known in the technical field to which the present invention belongs and does not have a direct relation to the present invention. This is done in order to omit unnecessary explanation in order to convey the core idea of the present invention more clearly.

For the same reason, some components in the attached drawings are exaggerated, omitted, or shown schematically. Additionally, the size of each component does not wholly reflect its actual size. In each drawing, the same reference numbers are assigned to identical or corresponding components.

The advantages and characteristics of the present invention, and the method by which these are achieved, will become clear upon referring to the embodiments described in detail below, in combination with the attached drawings. However, the present invention is not limited to the embodiments set forth below, but can be implemented in various different forms; these embodiments are presented only to complete the disclosure of the present invention, and to fully inform a person of ordinary skill in the art to which the invention pertains of the scope of the invention; the present invention is defined only by the scope of the claims. Throughout the specification, the same reference symbols denote the same components.

Here it will be understood that each block of the processing flowcharts, and combinations of the flowcharts, can be carried out by means of computer program instructions. These computer program instructions may be loaded in a processor of a general-purpose computer, a special-purpose computer, or other programmable data processing device, such that when the processor of the computer or other programmable data processing device executes the instructions, a means is generated for carrying out the functions described in the flowchart block(s). These computer program instructions can also be stored in a computer-usable or computer-readable memory that can direct a computer or other programmable data processing device to implement a function in a particular way; consequently, the instructions stored in the computer-usable or computer-readable memory can also produce an article of manufacture that contains an instruction means for carrying out the function described in the flowchart block(s). Because the computer program instructions can also be loaded in a computer or other programmable data processing device, a series of operational steps can be carried out on the computer or other programmable data processing device to generate a computer-executable process, so that the instructions carried out on the computer or other programmable data processing device can also provide steps for executing the functions described in the flowchart block(s).

In addition, each block may represent a module, segment, or portion of code that comprises one or more executable instructions for executing a particular logical function(s). It should also be noted that in some alternative embodiments, it is possible for the functions mentioned in the blocks to occur out of order. For example, two blocks shown in succession may in fact be executed at substantially the same time, or depending on the respective functions of the blocks, they may sometimes be executed in reverse order.

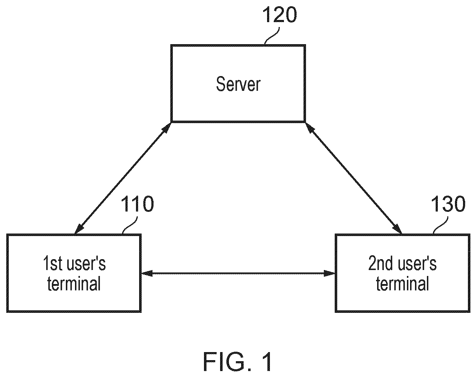

FIG. 1 is a schematic drawing showing a system that provides a matching service according to one embodiment.

According to various embodiments, a system that provides a matching service comprises a terminal (110) of a first user, a server (120), and a terminal (130) of a second user. A system that provides a matching service according to one embodiment may further comprise a network that supports information transmission and reception between at least some of the first user's terminal (110), the server (120), the second user's terminal (130), and an external device.

The first user's terminal (110), the server (120), and the second user's terminal (130), in the system that provides the matching service, may comprise a transceiver, a memory, and a processor. In addition, each of the first user's terminal (110), the server (120), and the second user's terminal (130) signifies a respective unit that processes at least one function or operation; this may be implemented as hardware or software, or as a combination of hardware and software. Throughout the embodiments, the first user's terminal (110), the server (120), and the second user's terminal (130) are mentioned as separate devices and servers, but they may have a logically divided structure and may be implemented as separate functions in a single device or server.

According to one embodiment, the first user's terminal (110), the server (120), and the second user's terminal (130) may comprise a plurality of computer systems or computer software implemented as network servers. For example, at least some of the first user's terminal (110), the server (120), and the second user's terminal (130) may be connected to a lower-level device that can communicate with another network server through a computer network such as an intranet or internet, and may refer to a computer system and computer software that receives a request to carry out a task, carries out the task, and provides the outcome of carrying out the task. In addition, at least some of the first user's terminal (110), the server (120), and the second user's terminal (130) can be understood as a broad concept comprising a series of application programs that can operate on a network server, and various databases built inside the server. For example, at least some of the first user's terminal (110), the server (120), and the second user's terminal (130) may be implemented using a network server program that is provided in various ways according to operating system such as DOS, Windows, Linux, UNIX, or MacOS.

For convenience of explanation, the first user's terminal (110), the server (120), and the second user's terminal (130) are referred to as such; however, they should be understood as generic electronic devices that: correspond to various types of devices such as computer devices and mobile communication terminals; can comprise various types of devices; or can be comprised within various types of devices.

The first user is a user using the matching service, and can be understood as an illustrative example of a user using the matching service functionality to select a partner. The first user's terminal (110) provides one or more functions related to the matching service. Specifically, the first user's terminal (110) provides recommendation information including information about one or more users, and acquires a selection input with respect to a particular user (hereinafter described as the "second user") from among the one or more users. In addition, the first user's terminal (110) acquires information about waiting for matching with the second user; if the first user and the second user are being matched, it provides information related to the connection with the second user.

According to one embodiment, in response to a selection input with respect to the second user, the first user's terminal (110) may confirm whether to proceed with the matching process. In this case, if the first user's terminal (110) confirms to proceed with the matching process, it may acquire information about waiting for matching with the second user.

The server (120) is a device that centrally processes an operation for providing a matching service. For example, in response to a selection input, the server (120) may determine whether to proceed with a matching process and may provide the outcome of that determination to the first user's terminal (110). In addition, if the server (120) determines to proceed with the matching process, it may match the first user and the second user if established criteria are met. If the server (120) matches the first user and the second user, it may provide matching information to one or more of the first user's terminal (110) and the second user's terminal (130).

Moreover, there may be various embodiments related to operations that the server (120) carries out; for example, the server (120) according to one embodiment may determine one or more users comprised in the recommendation information, and may also determine the waiting status of the first user for matching with the second user.

The second user is a user using the matching service, and may correspond to a partner selected by the first user for matching. The second user's terminal (130) provides one or more functions related to the matching service. Specifically, the second user's terminal (130) confirms information about waiting for matching with the second user (including waiting information associated with the first user), and if the first user and the second user are being matched, it provides information related to the connection with the first user.

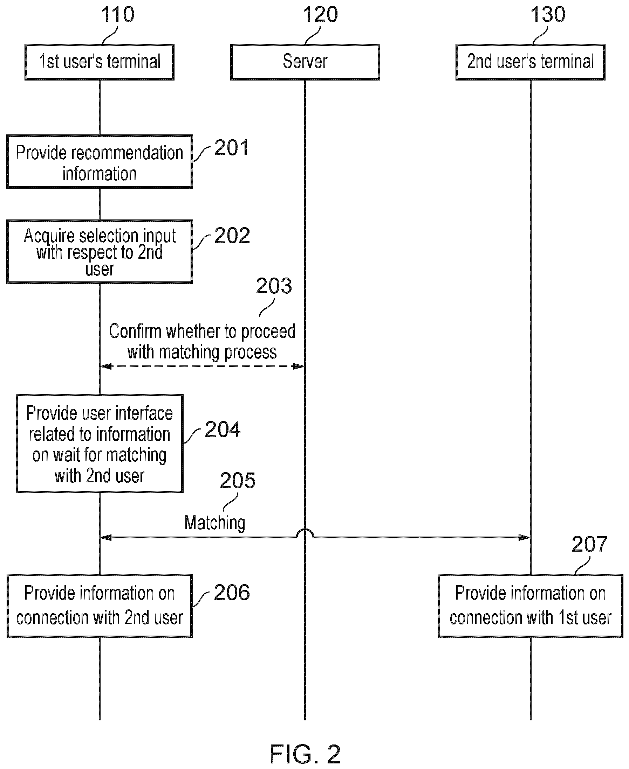

The operation of the first user's terminal (110), the server (120), and the second user's terminal (130) is described below in greater detail with reference to FIGS. 2 to 10 and the like.

The operations related to a method of providing a series of information according to various embodiments may be implemented by a single physical device, or they may be implemented by organically combining a plurality of physical devices. For example, some of the components comprised within a system that provides a matching service may be implemented by any one physical device, while others may be implemented by another physical device. For example, any one physical device may be implemented as part of the first user's terminal (110), and another physical device may be implemented as part of the server (120) or as part of another external device.

In some cases, each component comprised within the system that provides the matching service may be implemented as being respectively distributed and placed on different physical devices, and these distributed components may be organically combined to carry out the functions and operations of the system that provides the matching service. For example, in the present specification, the first user's terminal (110) comprises at least one sub-device, and one part of the operations that are described as being carried out by the first user's terminal (110) may be carried out by a first sub-unit, and another part of the operations may be carried out by a second sub-unit.

FIG. 2 is an operation flowchart illustrating the operation of each device in a system providing a matching service according to one embodiment.

Referring to FIG. 2, the terminal (110) of the first user according to one embodiment provides recommendation information comprising information about one or more users (201). The entities to which the first user's terminal (110) provides the recommendation information may comprise the first user, but are not limited thereto; the recommendation information may be output via an output device (for example a screen or the like) of the first user's terminal (110) so that a plurality of entities can receive it. Moreover, there may be various embodiments with respect to the subject to whom recommendation information is provided; in some embodiments the recommendation information may also be provided to another device.

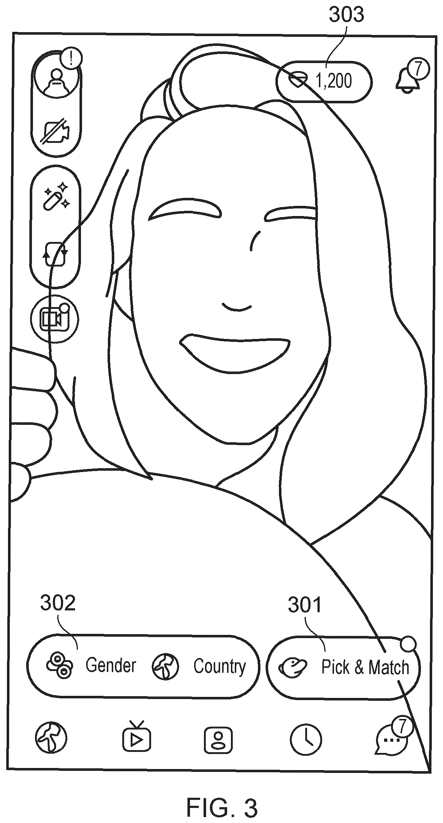

According to one embodiment, the first user's terminal (110) may select another user (e.g. a matching partner) to receive the first user's request for the matching service, and may provide recommendation information in response to the first user's request. For example, referring further to the illustrative example of FIG. 3, a function for using the service for matching by selecting a partner may be provided on the screen of the first user's terminal (110) (the "Pick & Match" function of reference numeral 301); and if an input with respect to this function is received from the first user, then recommendation information may be provided in response to the input received.

Returning again to FIG. 2, the first user's terminal (110) according to one embodiment may decide on one or more users based on the established condition information. According to one embodiment, the "established condition information" for deciding on one or more users may comprise at least one of: a condition related to whether the user is unsuitable for matching with the first user, a condition related to the user's profile information, and a condition related to whether the user has a history that is comprised within the recommendation information that was provided to the first user within an established period. The "user" mentioned in relation to the established condition information may be understood to refer not to the first user, but to one or more candidates for users to be included in the recommendation information that will be provided to the first user.

According to an illustrative example, the condition for whether a user is unsuitable for matching with the first user may be decided based on whether one or more of the following is satisfied: whether the user has been blocked by the first user, whether the user has been blocked by service policy, whether the user is a monitoring agent, and whether the user has a history of discipline. In addition, according to an illustrative example, the condition regarding whether the user is unsuitable to be matched with the first user may include a condition regarding whether there is a problem with the profile image; specific examples may include the following: no profile image, no person in the profile image, or a photo of another person who is not the user for whom the profile image is registered, or the like.

According to an illustrative example, the condition related to the user's profile information may include one or more of: a condition related to matching filter information included in the user's profile information, and a condition related to score information associated with the profile photo. In this regard, the matching filter information may for example comprise filtering criteria such as country, gender, and the like. It is also possible that the condition related to the user's profile information does not comprise a condition related to the matching filter information; in this case, even if the first user does not meet the filtering criteria set by the user, the user may be included in the recommendation information provided to the first user.

Also, depending on the embodiment, even if the user's matching filter information is not taken into consideration in this way, the first user's matching filter information may also be considered. For example, if the first user's matching filter information comprises information such as "resident of Asia region," the users included in the recommendation information provided to the first user may be limited to users in the Asia region; but even if a user's matching filter information comprises information such as "resident of Europe region," the recommendation information provided to the first user, who resides in Asia, may comprise such a user.

Embodiments may vary; for example, even if a user's profile information does not comprise explicit filtering criteria, one or more users may be decided on based on criteria established for service provision (for example, if the user has not requested different criteria, a user from the same country is matched with the highest priority, a user from a neighboring country is matched with the next highest priority, and a user from another country is matched with the lowest priority).

The score information associated with the profile photo may comprise a score set by an electronic device such as the server (120), or may comprise a score directly determined by a human being. According to one embodiment, the score information associated with the profile photo may comprise a score calculated based on a machine learning model; however, the scope of the present invention is not limited thereto.

With respect to the condition related to whether the user has a history that is included in the recommendation information that was provided to the first user within established criteria, "established criteria" can be interpreted in a broad sense, encompassing not only time criteria but also criteria related to quantity (for example number of people). For example, "the condition related to whether the user has a history that is included in the recommendation information that was provided to the first user within established criteria" according to an illustrative example may correspond to "a condition related to whether the user has a history of being included in recommendation information provided to the first user within the past 7 days"; according to another illustrative example, it may correspond to "a condition related to whether the user has been included among 600 users who have been recently provided to the first user in the form of recommendation information."

Related embodiments may vary, in addition to the above; the "established condition information" for deciding on one or more users may comprise a condition related to whether the number of (currently valid) items of information about waiting for matching with the user exceeds an established number.

Above, an embodiment has been described in which the first user's terminal (110) decides on one or more users based on established condition information; however, the subject of this operation is not limited to the first user's terminal (110). For example, an operation of deciding on one or more users based on established condition information may be carried out by the server (120), and the above-described description may be applied to understanding that operation in such a case as well.

According to one embodiment, the operation of reference numeral 201 in which recommendation information is provided may be carried out when the first user takes a particular action. For example, if the first user has not been provided with recommendation information (or if the recommendation information has been provided but is invalid due to expiration or a like reason), if the first user requests a function for using a service for matching by selecting a partner, recommendation information may be provided. By way of another illustrative example, recommendation information may be provided on a recommendation information page if the first user refreshes the screen display. By way of another illustrative example, recommendation information may be provided if the first user changes the matching filter information and saves it.

Notwithstanding the illustrative examples described above, in some cases such as if recommendation information cannot be generated for technical reasons, if the first user cannot use the function for using the service for matching by selecting a partner (for example if the first user has a history of discipline), or the like, the recommendation information may not be provided even if the first user takes a particular action.

According to one embodiment, the first user's terminal (110) acquires information about the first user's wait for random matching. Depending on the embodiment, the random matching function may be provided regardless (i.e., independently) of whether the first user has requested the function for using the service for matching by selecting a partner; or it may be provided only if the first user has requested the function to select a partner to use the matching service; in addition to these, there may also be various embodiments related to cases in which a random matching function is provided.

According to one embodiment, the matching process carried out in response to the selection input may be carried out with greater priority than the process of matching the first user and a partner through random matching. In other words, a connection between users based on random matching may have a lower priority than a connection between users based on partner selection matching. Thus, if the first user can be connected with user A via random matching and can be connected with user B via partner selection matching, if the user is using a service for matching by selecting a partner, the first user may be connected with user B first.

According to one embodiment, a logic for deciding on information about one or more candidate users associated with the random matching partner, and a logic for deciding on information about the one or more users that the recommendation information comprises, may differ from one another. By way of an illustrative example, in the case of random matching, the match is made with consideration of both partners' matching filter information; in contrast, in the case of the service for matching by selecting a partner, it may be that only the first user's matching filter information is considered and the partner's matching filter information is not considered.

In the case of random matching, the first user does not select the partner with whom it will be matched, and the first user may not know exactly who it will be matched with as a partner. However, the partner with whom the first user is matched need not be decided on completely arbitrarily. For example, one or more factors (for example a preference of the first user, etc.) may be considered in order to decide which partner will be matched with the first user. In this regard, referring further to the above-described "logic for deciding on information about one or more candidate users associated with the random matching partner," it can be more clearly understood that a partner matched with the first user by random matching is not a partner determined completely arbitrarily.

By way of another illustrative example, although in the case of random matching, the matching is done in a way that tends to make the duration of the match as long as possible (for example reflecting the tastes of both users as much as possible), users who are more likely to be generally popular may be recommended to a first user using a service for matching by selecting a partner. In addition, in some embodiments, a user who has a good reputation with other users may be recommended to a first user who uses a service for matching by selecting a partner.

In addition to the illustrative examples above, there may be various embodiments in relation to how matching logics for random matching differ from matching logics for a service for matching by selecting a partner (for example logics for deciding on information about one or more users included in the recommendation information).

The first user's terminal (110) acquires a selection input with respect to a second user included among the one or more users (202). The selection input may comprise a touch input with respect to the information about the second user included among the recommendation information. The selection input may be received from the first user, but is not necessarily limited thereto.

According to one embodiment, in response to an acquired selection input, the first user's terminal (110) may confirm whether to proceed with the matching process (203). The operation of reference numeral 203 is not necessarily carried out by the first user's terminal (110); therefore, depending on the embodiment, it is possible that the first user's terminal (110) does not carry out the operation of reference numeral 203.

According to one embodiment, the first user's terminal (110) may determine whether the quantity of assets held by the first user is at least the quantity of assets required to acquire information about waiting for matching with the second user and to match the second user with the first user. In this case, if the quantity of assets held by the first user is less than the quantity of assets required, the first user's terminal (110) may decide not to proceed with the matching process. Alternatively, if the quantity of assets held by the first user is less than the quantity of assets required, the first user's terminal (110) may provide information indicating that the assets are insufficient, and may wait for the assets to be replenished for a predetermined period of time; if the assets are still insufficient after the wait, it may decide not to proceed with the matching process.

According to one embodiment, the first user's terminal (110) may confirm whether the second user is currently matching with another user, and based on that, may confirm whether to proceed with the matching process. For example, if the second user is currently matching with another user, the first user's terminal (110) may decide not to proceed with the process of matching with the second user. In addition, there may be various embodiments, such as, if the second user is matching with another user, deciding whether to proceed with the process of matching with the second user in consideration of how many other users are waiting to match with the second user.

According to one embodiment, the first user's terminal (110) may determine whether the second user is logged on to the matching service (hereinafter referred to as online status), and if not in online status, it may decide not to proceed with the matching process. In some embodiments, the first user's terminal (110) may determine not just whether the second user is online but also whether the second user is in a matchable state, and if the second user is not in a matchable state, it may decide not to proceed with the matching process (even if the second user is in an online state, matching may not be possible in some situations, such as when viewing a broadcast, using a store, or the like).

In some embodiments, the first user's terminal (110) may determine whether to proceed with the matching process based on one or more of: the number of items of waiting information (hereinafter referred to as "waiting information associated with the first user") generated by the first user's matching request (for example, a selection input with respect to the second user) and the number of items of information about waiting for matching with the second user. For example, the first user's terminal (110) may decide not to proceed with the matching process if there are 10 or more items of waiting information associated with the first user, or 15 or more items of information about waiting for matching with the second user.

In addition, various factors may be considered to determine whether to proceed with the matching process, such as whether either the first user or the second user is subject to discipline; whether either the first user or the second user has a history of discipline; whether either the first user or the second user is viewing a broadcast; and the like; such particular embodiments do not limit the scope of the present invention.

At least some of the factors described above as being able to be considered in confirming whether to proceed with the matching process may also have already been considered when providing recommendation information. For example, the recommendation information may be provided with consideration of whether the second user is online, but users who are not online may not be included in the recommendation information to begin with, and even after the first user's terminal (110) has provided the recommendation information, information including the result of that determination may be provided by determining in real time whether one or more users are in an online state (for example, information about users who have switched to offline may be shaded in gray). Moreover, the possibility of acquiring selection input from offline users may be prevented by deactivating the interface that enables the first user to select information about users who have switched to offline.

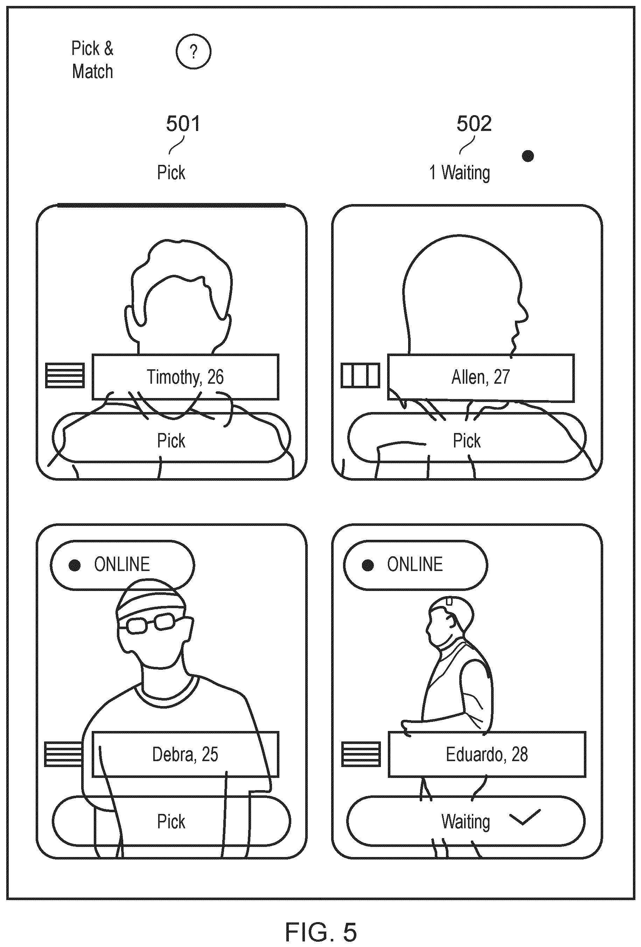

An illustrative example of further providing information that indicates whether a user is in an online state is described below with reference to FIG. 5.

In confirming whether the first user's terminal (110) will proceed with the matching process, the entity making a specific determination (for example a determination of whether assets are sufficient, whether the user is in an online state, determining the number of items of waiting information, and the like) is not limited to the first user's terminal (110). For example, a specific determination regarding whether to proceed with the matching process may be carried out by the server (120), and in this case, the first user's terminal (110) may confirm whether to proceed with the matching process upon receiving the outcome of that determination from the server (120). In addition, the above explanation can be applied analogously to understand the operation in other cases in which a specific determination is made by a device other than the first user's terminal (110).

The first user's terminal (110) acquires information about waiting for matching with the second user and provides a user interface related to the acquired waiting information (204). In the case of an embodiment in which the operation of reference numeral 203 is carried out (i.e., in the case of an embodiment in which it is confirmed whether to proceed with the matching process in response to a selection input with respect to the second user), if it is confirmed to proceed with the matching process, the first user's terminal (110) may carry out the operation of reference numeral 204. If the second user is currently being matched with another user, then when the matching between the second user and the other user is terminated, the server (120) matches the second user with a user associated with the highest priority waiting information, from among one or more items of information about waiting for matching with the second user. In this regard, the server (120) may decide the priority of the one or more pieces of information about waiting for matching with the second user based on the order in which they were acquired; this may for example include an embodiment in which the user who first registered information about waiting for matching with the second user has the highest priority (namely first-come, first-served), but is not limited thereto.

The subject of the decision as to the priority of the one or more pieces of information about waiting for matching based on the order in which they were acquired may be limited to waiting information associated with a user who has not yet been matched with the second user. In other words, if a third user has been matched with a second user, the waiting information associated with the third user may be deleted or pushed down to the lowest priority.

According to one embodiment, among the one or more pieces of information about waiting for matching with the second user, waiting information associated with a user using a particular feature may have a higher priority than waiting information associated with another user who is not using the particular feature. For example, even if waiting information associated with the third user for matching with a second user was acquired before the information about the first user's wait for matching with the second user, the first user may have a higher priority than the third user as a result of using the particular function.

In contrast, if the second user is not currently being matched with another user, the server (120) may match the first user with the second user. This may be because if the second user is not currently matching, it can be understood that there are no other valid users waiting for the second user (because if there were another valid user waiting, that user would have been matched with the second user). However, in some exceptional cases, such as if the second user or other valid user is currently being asked if they accept a match between the second user and the other valid user, or if a brief gap in matching has occurred immediately after the second user ended a match that was in progress, the server (120) may not match the first user with the second user.

If the first user and the second user are being matched (205), the first user's terminal (110) provides information related to the connection with the second user (206). In addition, the second user's terminal (110) [sic] provides information related to the connection with the first user (207). In this regard, the first user and the second user may be matched if their place in the matching order is reached according to priority, and a separate acceptance by the second user's terminal (130) may not be required; however, the scope of the present invention is not limited thereto.

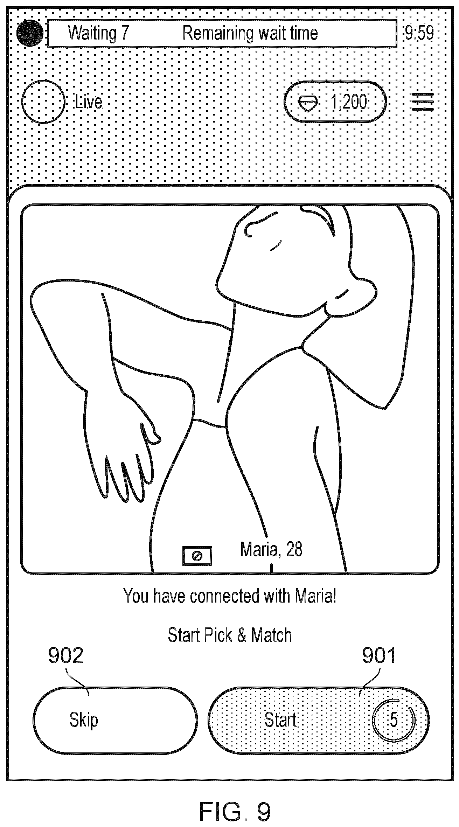

There may be some differences between the information provided to the first user's terminal (110) and the information provided to the second user's terminal (110) [sic]; a more detailed illustrative example in this regard to this is described below with reference to FIG. 9.

If the first user and the second user are being matched, the first user's terminal may provide a match termination function after a set time has elapsed from the time the first user and the second user were matched. In this regard, according to one embodiment, the time until the match termination function is provided if the match was made by selecting the partner may be different from the time until the match termination function is provided if the match was made by random matching. For example, if a partner was selected and matched, a match termination function may be provided after 5 seconds, but if the match was random, the match termination function may be provided after 3 seconds.

According to one embodiment, the time the first user must wait to be provided with the match termination function may differ from the time the second user must wait to be provided with the match termination function. For example, the first user may be provided the function to terminate the match as soon as the match is made, while in contrast, the second user may be provided the function to terminate the match only after 5 seconds have passed. There may be various embodiments for such a case, such as providing the second user the match termination function as soon as the match is made if the second user is also using a particular function.

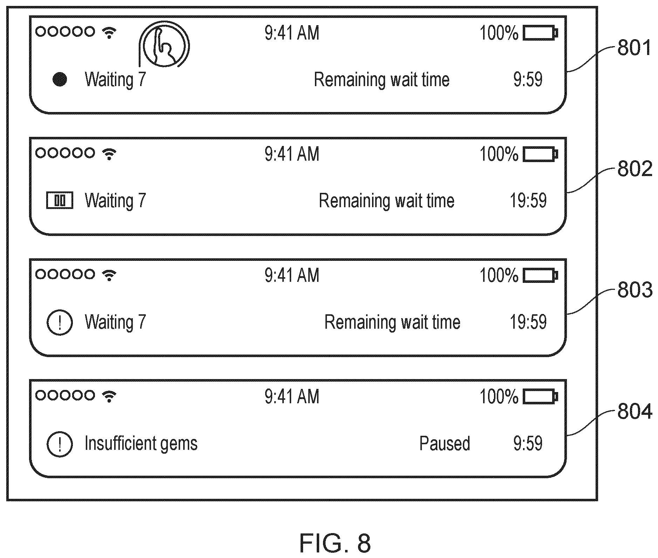

According to one embodiment, the first user's terminal (110) according to one embodiment may further provide: information about whether there is additional waiting information associated with the first user in addition to the information about waiting for matching with the second user; and, if there is additional waiting information associated with the first user, that waiting information. Such information may be provided not only on a page containing recommendation information, but also may be provided when the first user engages in another activity away from the page containing the recommendation information; a more detailed illustrative example in this regard is described below with reference to FIG. 8.

FIG. 3 is a drawing illustrating an exemplary function for using the service for matching by selecting a partner according to one embodiment.

Referring to FIG. 3, a terminal (110) of a first user according to one embodiment may provide a function for using a service for matching by selecting a partner (the "pick & match" function of reference numeral 301). In addition, the first user's terminal (110) may also provide a function for entering matching filter information that may be considered in providing recommendation information in relation to the service for matching by selecting a partner (the function of reference numeral 302).

Further, the first user's terminal (110) may help the first user determine whether there is sufficient assets to use the service for matching by selecting a partner by providing an additional amount of assets held by the first user (the remaining gem quantity of reference numeral 303).

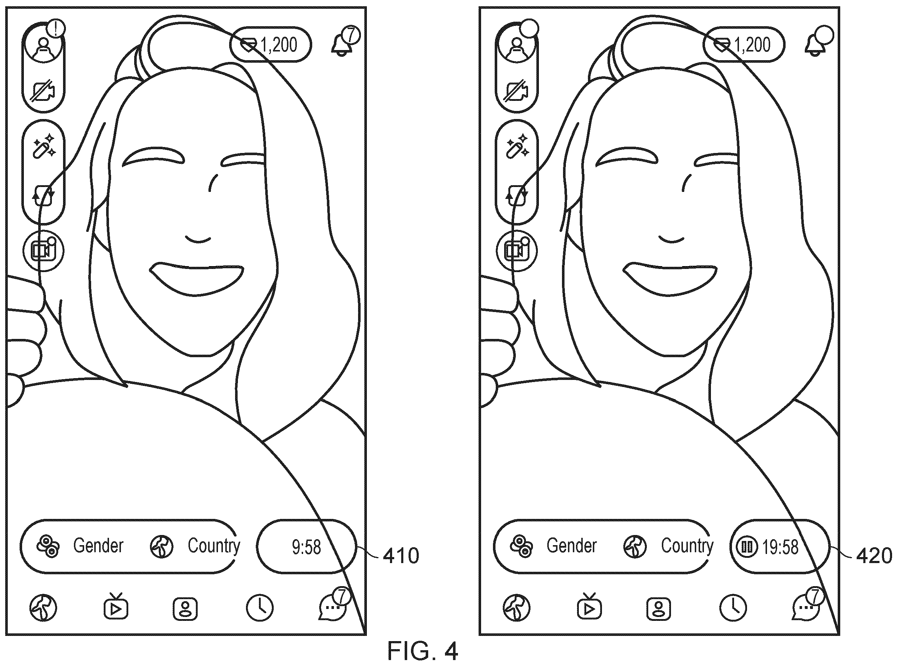

FIG. 4 is a drawing illustrating an exemplary screen display providing status information related to the first user's wait according to one embodiment. With regard to the below description of FIGS. 4 to 7, it should be understood that the subject of the operations that are described as being carried out by the first user's terminal (110) is specified as such only for convenience of explanation, and these operations may actually be carried out by another device such as a server (120).

Referring to FIG. 4, according to an embodiment, the terminal (110) of the first user may determine the status of the first user's wait for matching with the second user. The wait status may comprise a normal progress state, a paused state, and a no longer valid state. The paused state may encompass a paused state due to lack of assets, a state in which the wait cannot proceed normally for technical reasons, a paused state by request of the first users, and the like. In this regard the state in which the wait cannot proceed normally for technical reasons may encompass a state in which it is problematic for technical (or policy) reasons to proceed immediately with waiting for the match, such as if the first user is watching a broadcast; apart from this is may also encompass situations in which the first user deactivates an app or page that provides the matching service, or puts it in the background and engages in another activity.

If the first user uses a function other than the matching service through the app that provides the matching service (for example, visiting a store, browsing other users' profile information, or the like), the wait need not be paused simply because the user has not stayed on the screen display related to the matching service, and if it is technically possible to proceed simultaneously with the wait for matching, the wait can be kept in the normal progress state.

The no longer valid waiting state may encompass a state in which the wait has been cancelled, a state in which the wait has expired due to the time set for the wait having elapsed, and the like. In this regard, the state in which the wait has been cancelled may encompass a state in which the wait has been cancelled at the first user's request, a state in which the wait has been cancelled by a particular action of the first user (for example deleting the app), a state in which the wait has been cancelled due to the first user losing eligibility (e.g., being disciplined or withdrawing from the service), and the like.

If the first user's wait for matching with the second user is in a normal progress state, the first user's terminal (110) may apply the first condition related to the expiration of the first user's wait. If the first user's wait for matching with the second user is paused, the first user's terminal (110) may apply a second condition related to the expiration of the first user's wait. According to an illustrative example, if the wait of a first user for matching with a second user is in a normal progress state, the waiting information may expire if 60 minutes have elapsed since the waiting information was acquired (the first condition); and if the wait of the first user for matching with the second user is in a paused state, the waiting information may expire if the paused state is maintained continuously for 20 minutes or more (the second condition).

In some embodiments, the second condition may further comprise the content of the first condition while also comprising, as an OR condition, the content of another detailed condition.

According to one embodiment, the first user's terminal (110) may provide status information related to the first user's wait. Referring to the illustrative example of reference numeral 410, if the wait is progressing normally, the first user's terminal (110) may display the elapsed time since acquiring the waiting information, or it may display the remaining time until expiration of the wait information based on the above-described first condition. Referring to the illustrative example of reference numeral 420, if the wait is in a paused state, the first user's terminal (110) may provide an icon indicating the paused state, and may display the elapsed time since entering the paused state; or it may display the remaining time until expiration of the waiting information based on the above-described second condition.

FIG. 5 is a drawing illustrating, by way of example, recommendation information according to one embodiment.

Referring to FIG. 5, the information about one or more users included in the recommendation information according to one embodiment may comprise such information as each user's nationality, name, age, profile image, and the like. The recommendation information may further provide information about whether each user is currently logged on to the matching service in real time (e.g. in an online state). In addition, the recommendation information according to one embodiment may further comprise information about whether the one or more users are available for matching, or whether the one or more users are being matched with another user.

If the first user's selection input has been acquired with respect to the second user, the first user's terminal (110) can provide status information related to the wait along with the recommendation information; this may for example be provided in a form comprising text such as "waiting" (see the depicted information about "Eduardo"). In addition, the first user's terminal (110) may provide a function (see reference numeral 502) that enables a user among the one or more users included in the recommendation information who has acquired the first user's selection input to be viewed separately; in this case, a function may be provided that enables the user to be viewed separately (one form of reference numeral 501) or that allows a user among the one or more users included in the recommendation information who has not acquired the selection input to be viewed separately (another form of reference numeral 501); various other such embodiments may exist.

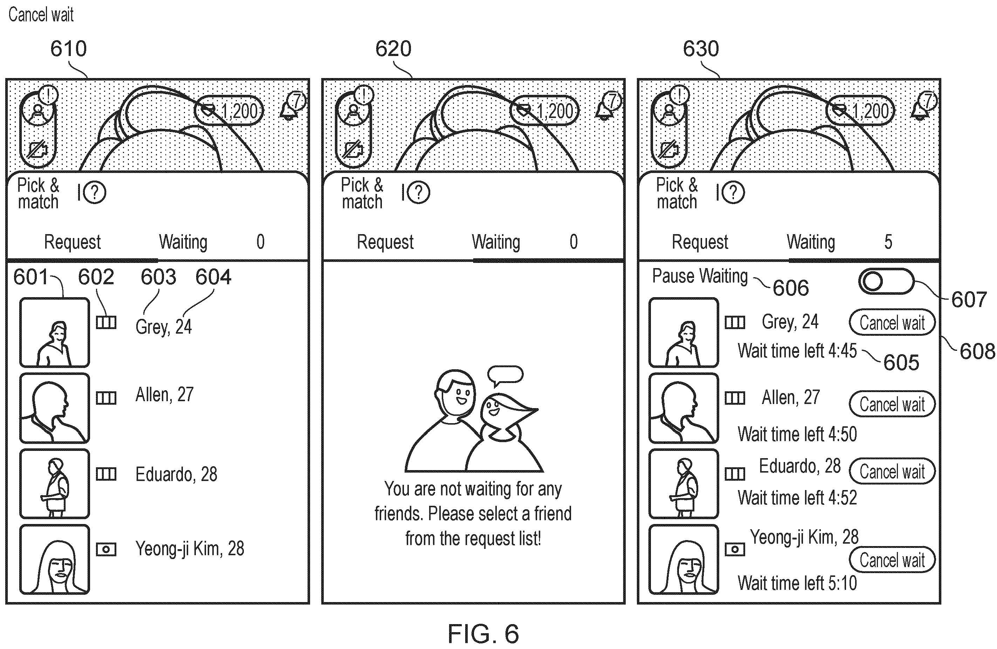

FIG 6 is a screen display illustrating, by way of example, information about waiting for matching with a selected partner according to one embodiment.

In FIG. 6, according to the illustrative example of reference numeral 610, an example is shown of recommendation information according to one embodiment, in which information about one or more users is displayed; the details of this can be understood by referring to the description of FIG. 5. For example, the recommendation information may comprise such information as each user's nationality (602), name (603), age (604), profile image (601), and the like.

According to one embodiment, the recommendation information may comprise information about waiting for matching with a partner the first user has selected. As described above in FIG. 5, the first user's terminal (110) according to one embodiment may provide a function (in the illustrative examples of FIG. 6, the "Waiting" tab) that allows a user with respect to whom the first user's selection input has been acquired to be categorized and viewed separately; according to that function, a page may be provided to the first user that includes waiting information. According to the illustrative example of reference numeral 620, if there is no partner selected by the first user, the first user's terminal (110) may output a phrase such as "You are not waiting for any friends. Please select a friend from the request list!" on a page that includes waiting information. In addition, according to the illustrative example of reference numeral 630, if there is a partner selected by the first user, the first user's terminal (110) may provide information (605) about the remaining waiting time for each user selected by the first user, together with information about each user.

The first user's terminal (110), in addition to providing information on the remaining wait time for each user selected by the first user, may provide a function for switching the waiting state to a paused state (for example, the text "pause waiting" (606) and the toggle button (607) on the right side thereof as shown in the illustrative example of reference numeral 630), or a function for canceling the waiting state (for example a button (608) including the text "cancel wait" as shown in the illustrative example of reference numeral 630 in FIG. 6).

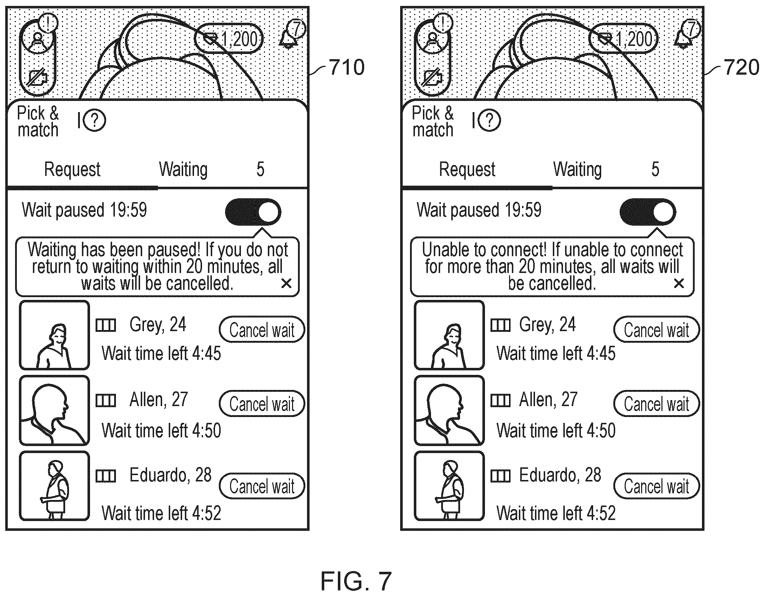

In this regard, referring further to the illustrative example of reference numeral 710 in FIG. 7, if there is a request from the first user for a function to switch the wait to a paused state, the first user's terminal (110) may activate the pause function while displaying a phrase such as "Waiting has been paused! If you do not return to waiting within 20 minutes, all waits will be canceled." This may for example encompass an embodiment in which a toggle button corresponding to a function for switching the wait to a paused state is switched to the ON state.

In addition, referring further to the illustrative example of reference numeral 720 in FIG. 7, the first user's terminal (110) may activate the pause function even in the case of a paused state due to inadequate assets or a state in which the wait cannot proceed normally for technical reasons. However, in this case, the first user can be enabled to distinguish whether the connection was paused at the first user's own request or for another reason, by displaying a phrase that differs from when the pause function has been activated at the first user's request, such as for example "Unable to connect! If unable to connect for more than 20 minutes, all waits will be canceled."

If the wait has been paused at the request of the first user as in the illustrative example of reference numeral 710 in FIG. 7, the wait paused state can be released and switched to the waiting state if there is a user input to the toggle button; but if the wait has been paused for another reason, as in the example of reference numeral 720 in FIG. 7, it may be necessary to resolve that reason in order to release the wait paused state.

FIG. 8 is a drawing illustrating examples according to one embodiment of providing status information related to the first user's wait on part of the screen even if the first user leaves a page containing recommendation information.

Referring to FIG. 8, the first user's terminal (110) according to one embodiment may further provide: information about whether there is additional waiting information associated with the first user in addition to the information about waiting for matching with the second user; and, if there is additional waiting information associated with the first user, the associated waiting information. According to one embodiment, such information may be provided even if the first user is engaging in another activity away from the page that contains the recommendation information.

According to one embodiment, the first user's terminal (110) may provide information about the total number of items of waiting information (or, alternatively, information about the number of items of waiting information other than information about waiting for matching with the second user) if there is additional waiting information, and may provide information on wait status. For example, the illustrative example of reference numeral 801 may correspond to an embodiment in which information is provided about the total number of items of waiting information, together with an icon indicating that the wait is in a paused state. When the waiting is in a normal progress state as in this case, additional profile information (for example a profile image) may be provided for the user with the highest priority.

In addition, the illustrative examples of reference numerals 802 and 803 may correspond to embodiments in which information is provided about the total number of items of waiting information, together with an icon indicating that the wait is in a paused state. The icon of reference numeral 802 may indicate a case in which the wait is in a paused state owing to a request from the first user; the icon of reference numeral 803 may indicate a case in which the wait is in a paused state owing to a reason other than a request from the first user.

Various embodiments may exist, as in the illustrative example of reference numeral 804, wherein if the wait is paused, information may be provided on the reason for the pause, such as "insufficient gems," and in addition, information may be provided about the remaining time corresponding to the waiting information with the shortest remaining time until expiration, from among the items of waiting information associated with the first user.

It has been described above that if the first user and the second user are being matched, the first user's terminal (110) may provide information related to the connection with the second user. In this regard, according to an embodiment, if the first user leaves the page containing recommendation information and engages in another activity, the "information related to connection with the second user" provided by the first user's terminal (110) may comprise more detailed information than in the case in which the first user does not leave the page containing recommendation information.

FIG. 9 is a drawing illustrating, by way of example, an operation of providing information related to a connection with the second user when the first user and the second user are being matched, according to one embodiment.

Referring to FIG. 9, according to an embodiment, if the first user and the second user are being matched, the first user's terminal (110) provides information related to the connection with the second user, and the second user's terminal (110) [sic] provides information related to the connection with the first user. The information provided by the first user's terminal (110) may comprise profile information of the second user (profile image, nationality, name, age, and the like) and may also comprise a function (901) for initiating a match and a function (902) for refusing the match. In some embodiments, if the first user does not make any requests for at least a set period of time (for example 5 seconds), the first user may be considered to intend to match with the second user and the match may be initiated automatically.

According to one embodiment, the information provided by the second user's terminal (110) [sic] may comprise the first user's profile information, but it is possible that it does not comprise at least one of the function for initiating a match (901) and the function for refusing the match (902). Alternatively, restrictions may be imposed on the information provided by the second user's terminal (110) [sic], such as establishing an additional condition (for example a time condition) in relation to the information, even if the information comprises the function (901) for initiating a match or the function (902) for refusing the match. However, even in such a case, embodiments may vary, such as in that if the second user is also using a particular function, the function (901) for initiating a match and the function (902) for refusing the match may be provided to the second user without any separate restrictions.

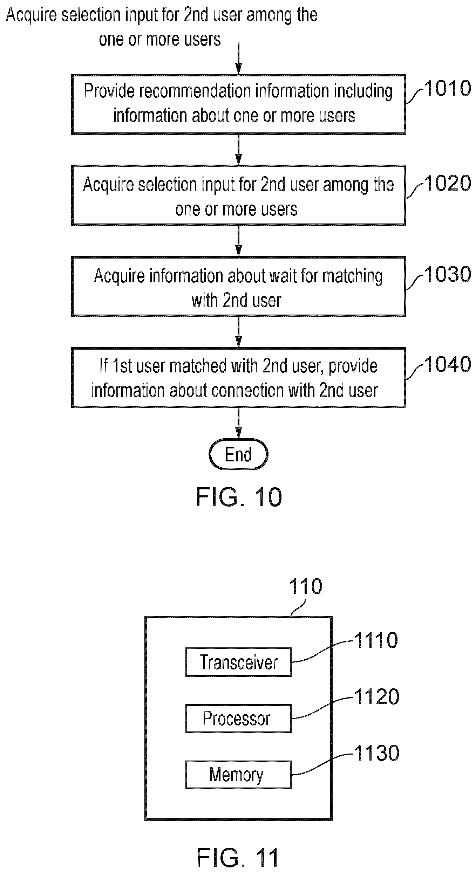

FIG. 10 is an operation flowchart of a method of providing a matching service in the terminal of the first user according to one embodiment.

Referring to FIG. 10, the terminal (110) of the first user according to one embodiment provides recommendation information comprising information about one or more users (1010). According to one embodiment, the first user's terminal (110) may select another user (e.g. a matching partner) to receive the first user's request for the matching service, and may provide recommendation information in response to the first user's request.

The first user's terminal (110) acquires a selection input with respect to a second user included among the one or more users (1020). The selection input with respect to the second user may comprise touch input with respect to the information about the second user included in the recommendation information. The selection input with respect to the second user may be received from the first user, but is not necessarily limited thereto.

The first user's terminal (110) acquires information about waiting for matching with the second user (1030). If the second user is currently being matched with another user, then when the matching between the second user and the other user is terminated, the server (120) matches the second user with a user associated with the highest priority waiting information, from among one or more items of information about waiting for matching with the second user.

According to one embodiment, in response to an acquired selection input, the first user's terminal (110) may confirm whether to proceed with the matching process. According to one embodiment, the first user's terminal (110) may determine whether the quantity of assets held by the first user is at least the quantity of assets required to acquire information about waiting for matching with the second user and to match the second user with the first user, and based on the outcome of that determination, may confirm whether to proceed with the matching process. In such a case, if it is confirmed to proceed with the matching process, the operation of reference numeral 1030 may be carried out.

If the first user and the second user are being matched, the first user's terminal (110) provides information related to the connection with the second user (1040). In addition, the second user's terminal (110) [sic] provides information related to the connection with the first user.

FIG. 11 is an exemplary drawing of the configuration of the terminal of the first user according to one embodiment.

Referring to FIG. 11, the first user's terminal (110) comprises a transceiver (1110), a processor (1120), and a memory (1130). The first user's terminal (110), via the transceiver (1110), may be connected to and exchange data with a server (120), a second user's terminal (130), other external devices, and the like.

The processor (1120) may comprise at least one of the devices described above with reference to FIGS. 1 to 10, or may carry out at least one of the methods described above with reference to FIGS. 1 to 10. The memory (1130) may store information for carrying out at least one of the methods described above with reference to FIGS. 1 to 10. The memory (1130) may be a volatile memory or a non-volatile memory.

The processor (1120) may control the first user's terminal (110) in order to execute a program and provide information. The code of the program executed by the processor (1120) may be stored in the memory (1130).

In addition, the first user's terminal (110) according to one embodiment may further comprise an interface that may provide information to the user.

The present specification and drawings disclose preferred embodiments of the present invention; although particular terms have been used, they have been used only to easily explain the technical content of the present invention and in a conventional sense so as to assist in understanding the present invention, and are not intended to limit its scope. In addition to the embodiments disclosed herein, it will be apparent to a person of ordinary skill in the art to which the present invention pertains that other modifications based on the technical idea of the present invention are possible.

The server, electronic device, or terminal recommended according to the above-described embodiments may comprise: a processor, a memory for storing and executing program data, a permanent storage such as a disk drive, a communication port that communicates with an external device, a touch panel, a key, a user interface device such as a button, or the like. Methods that are implemented as software modules or algorithms may be stored on a computer-readable recording medium as computer-readable codes or program commands that can be executed by the processor. Computer-readable recording media include magnetic storage media (for example read-only memory (ROM), random-access memory (RAM), floppy disks, hard disks, and the like) and optical reading media (for example CD-ROM, Digital Versatile Disc (DVD)), and the like. The computer-readable recording medium is distributed in computer systems connected via a network so that computer-readable codes may be stored and executed in a distributed manner. The medium is readable by a computer, and may be stored in the memory and executed by the processor.

The present embodiment may be represented by functional block configurations and various processing steps. Such functional blocks may be implemented as any number of various hardware and/or software configurations that execute the particular functions. For example, the embodiment may use integrated circuit configurations, such as memory, processing, logic, look-up tables, and the like, that may execute various functions under the control of one or more microprocessors or other control devices. Similarly to how the components may be implemented as software programs or software elements, the present embodiment may be implemented in a programming or scripting language such as C, C++, Java, assembler, Python, or the like, comprising various algorithms implemented as a combination of data structures, processes, routines or other programming constructs. Functional aspects may be implemented as algorithms executed on one or more processors. Additionally, the present embodiment may use conventional techniques for electronic environment settings, signal processing, and/or data processing and the like. Such terms as "mechanism," "element," "means," and "configuration" can be used broadly and are not limited to mechanical and physical configurations. The above terms may encompass the meaning of a series of software processes (routines) in connection with a processor or the like.

The above-described embodiments are only an illustrative example, and other embodiments may be implemented within the scope of the claims set forth below.

## Claims

1. Method of providing a matching service from a terminal of a first user, comprising:
a step in which recommendation information is provided that comprises information about one or more users;
a step in which a selection input is acquired for a second user among the one or more users;
a step in which information about waiting for matching with the second user is acquired; and
a step in which, if the first user and the second user are matched, information is provided related to a connection with the second user.

2. The method of providing a matching service according to Claim 1,
further comprising: a step in which waiting information for random matching of the first user is acquired.

3. The method of providing a matching service according to Claim 2, wherein
a logic for deciding on information about one or more candidate users associated with the random matching partner, and a logic for deciding on information about the one or more users included in the recommendation information, differ from one another.

4. The method of providing a matching service according to Claim 1, wherein
the step of providing the recommendation information comprises
a step in which a request for a matching service is received from the first user by selecting another user; and
a step in which the recommendation information is provided in response to the request from the first user.

5. The method of providing a matching service according to Claim 1, wherein
if the second user is currently being matched with another user,
when the matching between the second user and the other user is terminated, the server matches the second user with a user associated with the highest priority waiting information, from among one or more items of information about waiting for matching with the second user.

6. The method of providing a matching service according to Claim 5, wherein
the server decides the priority of the one or more items of information about waiting for matching with the second user based on the order in which they were acquired.

7. The method of providing a matching service according to Claim 6, wherein
among the one or more pieces of information about waiting for matching with the second user, waiting information associated with a user using a particular feature has a higher priority than waiting information associated with another user who is not using the particular feature.

8. The method of providing a matching service according to Claim 1, wherein
if the second user is not currently being matched with another user,
the server matches the first user and the second user.

9. The method of providing a matching service according to Claim 1, wherein
the step in which the recommendation information is provided comprises:
a step in which the one or more users are decided based on established condition information,
and wherein the established condition information comprises
at least one of:
a condition related to whether the user is unsuitable for matching with the first user,
a condition related to the user's profile information, and
a condition related to whether the user has a history that is comprised within the recommendation information that was provided to the first user and is within established criteria.

10. The method of providing a matching service according to Claim 1,
wherein the recommendation information comprises
at least one of the following items of information:
the nationality of the one or more users,
the age of the one or more users,
the profile image of the one or more users,
whether the one or more users are connected to the matching service in real time, and
whether the one or more users are currently being matched with another user.

11. The method of providing a matching service according to Claim 1, wherein
the method further comprises a step in which, in response to the selection input, it is confirmed whether to proceed with the matching process,
and wherein if it is confirmed to proceed with the matching process, the terminal of the first user acquires the information about waiting for matching with the second user.

12. The method of providing a matching service according to Claim 11, wherein
the matching process is carried out with greater priority than a process of matching the first user and a partner through random matching.

13. The method of providing a matching service according to Claim 11, wherein
it is determined whether to proceed with the matching process based on one or more of: the number of items of waiting information associated with the first user, and the number of items of information about waiting for matching with the second user.

14. The method of providing a matching service according to Claim 11, wherein
the step in which it is confirmed whether to proceed with the matching process comprises:
a step in which it is determined whether the quantity of assets held by the first user is at least the quantity of assets required to acquire information about waiting for matching with the second user and to match the second user with the first user; and
a step in which if the quantity of assets held by the first user is less than the required quantity of assets, information is provided indicating that the assets are insufficient.

15. The method of providing a matching service according to Claim 11, wherein
if it is confirmed to proceed with the matching process,
the method further comprises a step in which one or more of the following is provided:
information about whether there is additional waiting information associated with the first user in addition to the information about waiting for matching with the second user, and
if there is additional waiting information associated with the first user, that waiting information.

16. The method of providing a matching service according to Claim 1, wherein the method further comprises:
a step in which the status of the first user's wait for matching with the second user is determined;
a step in which if the wait of the first user for matching with the second user corresponds to a normal progress state, a first condition is applied that relates to the expiration of the wait of the first user; and
a step in which, if the wait of the first user for matching with the second user is in a paused state, a second condition is applied that relates to the expiration of the wait of the first user.

17. The method of providing a matching service according to Claim 1, further comprising
a step in which information is provided about the time remaining until the expiration of the wait of the first user, in relation to the wait of the first user for matching with the second user.

18. The method of providing a matching service according to Claim 1, wherein
if the first user and the second user are being matched,
the terminal of the first user provides a match termination function after a set time has elapsed from the time the first user and the second user were matched.

19. Computer-readable non-transitory recording medium on which is recorded a program for executing the method of Claim 1 on a computer.

20. Terminal of a first user that provides a matching service,
wherein the terminal of the first user comprises a transceiver, a memory that stores commands, and a processor, and wherein:
the processor is connected to the transceiver and the memory and
provides recommendation information comprising information about one or more users,
acquires a selection input with respect to a second user comprised among the one or more users,
acquires information about waiting for matching with the second user, and
if the first user and the second user are being matched, provides information related to a connection with the second user.

21. Method of providing a matching service from a terminal of a second user,
comprising a step in which waiting information associated with a first user for matching with the second user is confirmed; and
a step in which if the first user and the second user are being matched, information is provided that relates to a connection with the first user;
and wherein a selection input with respect to the second user is acquired from the terminal of the first user, and
the waiting information is acquired from the terminal of the first user.
